# EUROPÄISCHE PATENTSCHRIFT

(11) **EP 1 939 652 B1**
(45) Veröffentlichungstag und Bekanntmachung des Hinweises auf die Patenterteilung: **19.10.2011**
(21) Anmeldenummer: 07023989.2
(22) Anmeldetag: 11.12.2007
(51) Int. Cl.: G01V 8/10

(54) **Objektfeststellungssensor**
Object identification sensor
Capteur de détermination d'objet

(30) Priorität: 19.12.2006 DE 102006060062
(43) Veröffentlichungstag der Anmeldung: 02.07.2008
(73) Patentinhaber: SICK AG, 79183 Waldkirch/Breisgau (DE)
(72) Erfinder: Mack, Stefan, Dr., 79104 Freiburg (DE); Hammes, Markus, Dr., 79102 Freiburg (DE); Haberer, Christoph, 79104 Freiburg (DE)
(74) Vertreter: Manitz, Finsterwald & Partner GbR

(56) Entgegenhaltungen:
- EP-A- 1 503 226
- WO-A-00/64146
- DE-B3-102004 003 013
- US-B1- 6 392 755

## Beschreibung

Die Erfindung betrifft einen Objektfeststellungssensor zur Überwachung eines Schutzbereiches auf Anwesenheit eines Objekts.

Objektfeststellungssensoren werden eingesetzt, um einen Schutzbereich daraufhin zu überwachen, ob sich darin ein Objekt befindet. Der Begriff Objekt soll im Rahmen des vorliegenden Textes nicht nur Sachen beschreiben, sondern auch Personen oder Körperteile. Zum Beispiel kann überwacht werden, ob sich ein Körperteil einer Bedienperson in einem gefährlichen Bereich einer Maschine, z.B. einer Presse, befindet. Ein entsprechendes Signal des Objektfeststellungssensors wird verwendet, um ein Warnsignal zu erzeugen oder die Maschine zu stoppen, so dass Verletzungen vermieden werden können. Andererseits können Objektfeststellungssensoren z.B. eingesetzt werden, um Räume auf die Anwesenheit von Personen zu überwachen.

Neben einfachen Lichtschranken werden insbesondere zur Absicherung zweidimensionaler Schutzbereiche z.B. Lichtgitter oder Lichtvorhänge eingesetzt. Bei Lichtgittern werden z.B. eine Reihe von Lichtquellen nebeneinander verwendet, um einen flächenförmigen Schutzbereich zu beleuchten. Eine entsprechend angeordnete Reihe von Lichtempfängern gibt ein Objektfeststellungssignal aus, wenn z.B. der Lichtweg eines oder mehrerer der Lichtquellen unterbrochen wird.

Laserscanner basieren z.B. auf Laserradar und prüfen, ob ein in den Schutzbereich gesendetes Lasersignal von einem Objekt reflektiert wird oder nicht. Sie eignen sich insbesondere bei mobilen Anwendungen, bei denen eine hohe Flexibilität erforderlich ist. Solche Laserscannersysteme sind aufwendig und teuer in der Herstellung.

Michael W. Haney beschreibt in Applied Optics 45, Seiten 2901 ff. (2006), "Performance scaling in flat images" ein optisches Kamerasystem, bei dem ein dreidimensionaler Raum mit Hilfe einer feldförmigen Anordnung von Mikrolinsen auf ein Feld von Sensorpixeln abgebildet wird.

US 6,704,043 B2 beschreibt eine Anordnung, bei dem ein Feld von Mikrolinsen verwendet wird, um eine stereoskopische Abbildung zu ermöglichen.

DE 10 2004 003 013 B3 betrifft ein Bilderfassungssystem mit einem Mikrolinsenarray und einem Detektorarray. Jeder Mikrolinse ist ein oder wenige fotosensitive Pixel zugeordnet.

Eine Messvorrichtung, die eine Mikrolinsenreihe mit mehreren Mikrolinsen und eine Detektorreihe mit mehreren CCD-Elementen umfasst, ist in US 6,392,755 B 1 beschrieben. Eine punktförmige Lichtquelle erzeugt aufgrund der mehreren Mikrolinsen eine entsprechende Anzahl an Spots auf der Detektorzeile.

EP 1 503 226 A2 beschreibt eine Licht streuende Folie mit einer nicht periodischen Anordnung von Mikrolinsenelementen zur definierten Aufweitung von Sende- und/oder Empfangslichtstrahlen, die zwischen einer Sendeoptik und einer Empfangsoptik einerseits und einem Austrittsfenster andererseits vorgesehen ist. Auf diese Weise kann zum Beispiel ein kreisförmiger Strahlquerschnitt zu einem elliptischen Strahlquerschnitt aufgeweitet werden.

Ein Bilderfassungssystem mit einem Bildaufnehmer und wenigstens einer ersten vor dem Bildaufnehmer angeordneten Reihe aus Mikrolinsen, die derart angeordnet sind, dass auf dem Bildaufnehmer von den einzelnen. Mikrolinsen erzeugte Subbilder räumlich versetzt zueinander abgebildet werden, ist in WO 00/64146 A2 offenbart.

Es ist die Aufgabe der vorliegenden Erfindung, einen kostengünstigen Objektfeststellungssensor mit geringer Bautiefe zur Verfügung zu stellen.

Diese Aufgabe wird mit einem Objektfeststellungssensor mit den Merkmalen des Anspruchs 1 gelöst. Unteransprüche sind auf bevorzugte Ausführungsformen gerichtet.

Der erfindungsgemäße Objektfeststellurigssensor weist einen Bildaufnehmer auf, vor dem wenigstens eine Reihe aus Mikrolinsen angeordnet ist. Die Mikrolinsen sind derart angeordnet, dass auf dem Bildaufnehmer von den einzelnen Mikrolinsen erzeugte Subbilder räumlich versetzt zueinander abgebildet werden. Eine Auswerteeinheit ist derart ausgestaltet, die einzelnen Subbilder zur Steigerung der Auflösung zu verwenden, insbesondere um ein Bild höherer Auflösung zu simulieren. Die Auswerteeinheit ist zudem vorgesehen, ein von dem Bildaufnehmer empfangenes Bild auf Abweichungen von einem Sollbild bzw. -signal zu überwachen, wodurch z.B. ein Warnsignal oder ein Stoppsignal an eine Maschine ausgelöst werden kann. Das Sollsignal kann z.B. bei der Installation des Sensors ohne Objekt im Schutzbereich aufgenommen worden sein.

Der erfindungsgemäße Objektfeststellungssensor beruht auf dem Prinzip einer Kamera. Konventionelle Kamerasysteme würden jedoch aufgrund der konventionellen Optik, die eine Linse vor dem Bildaufnehmer umfassen würde, eine große Bautiefe aufweisen. Außerdem würden solche Systeme inhärent einen kompletten dreidimensionalen Raumausschnitt aufzeichnen, obwohl für viele Sicherheitsanwendungen die Überwachungen eines zweidimensionalen Feldes, aus Richtung der Kamera also einer Linie, ausreichend ist.

Durch die Verwendung von Mikrolinsen für den Objektfeststellungssensor ist eine signifikante Verringerung der Bautiefe möglich, ohne dass die für die Sicherheitsfunktion nötige Auflösung in Richtung der zu überwachenden Linie, die parallel zur Mikrolinsenreihe ist, beeinträchtigt wird. Durch die Mikrolinsenreihe werden einzelne Subbilder nur in Richtung der zu überwachenden Linie versetzt auf dem Bildaufnehmer abgebildet. Eine einzelne Mikrolinsenreihe reicht also zur Überwachung eines zweidimensionalen Schutzbereichs aus. Eine Auswerteeiririchtung kann die einzelnen Subbilder zur Steigerung der Auflösung verwerten, zum Beispiel um ein Bild höherer Auflösung zu simulieren. Außerdem können Mikrolinsenarrays bzw. -reihen z.B. über Batchverfahren kostengünstig hergestellt werden.

Der erfindungsgemäße Objektfeststellungssensor realisiert also eine kostengünstige auf einem Kameraprinzip basierende Anordnung mit geringer Bautiefe insbesondere zum Ersatz für Sicherheitslaserscanner.

Zur Überwachung eines einzelnen zweidimensionalen Schutzbereichs ist eine einzelne Reihe von Mikrolinsen ausreichend. Eine Dimension des zweidimensionalen Schutzbereichs erstreckt sich dann in Richtung dieser Reihe. Eine erhöhte Auflösung in Richtung dieser Dimension wird durch die Verwertung der einzelnen Subbilder gewährleistet.

Die Reihe aus Mikrolinsen kann z.B. aus Zylinder- oder Teilzylinderlinsen gebildet sein, die in einer Richtung senkrecht zur Zylinderachse nebeneinander angeordnet sind. Besonders kompakt und - insbesondere aufgrund der Möglichkeit der Verwendung kommerziell erhältlicher Mikrolinsenbatches - besonders küstengünstig ist die Verwendung von solchen nebeneinander angeordneten Mikrolinsen, die in allen Ebenen senkrecht zur Bildaufnehmerfläche einen linsenförmigen oder teillinsenförmigen Querschnitt haben.

Besonders kostengünstig und einfach zu handhaben ist die Verwendung eines Arrays aus CCD- oder CMOS-Elementen für den Bildaufnehmer. Insbesondere, wenn nur eine einzelne Reihe von Mikrolinsen vorgesehen ist, kann dieses Array auch eindimensional ausgestaltet sein und sich parallel zu der Reihe aus Mikrolinsen erstrecken.

Wie beschrieben, lässt sich bereits mit einer einzelnen Reihe aus Mikrolinsen ein zweidimensionaler Schutzbereich überwachen. Kommerziell erhältliche Mikrolinsenarrays werden im Batchverfahren hergestellt, so dass ohne wesentliche Erhöhung der Herstellungskosten trotzdem zweidimensionale Mikrolinsenarrays verwendet werden können. Die zusätzlichen Mikrolinsenreihen können dann z.B. vorteilhaft eingesetzt werden, um redundante Informationsüberwachung anderer Reihen zur Verfügung zu stellen. So kann die Sicherheit des Objektfeststellungssensors weiter erhöht werden.

Die optischen Eigenschaften der Mikrolinsen einzelner Reihen unterscheiden sich. Eine vorteilhafte Ausführugsform sieht vor, dass die Brennweite der Mikrolinsen wenigstens einer Reihe eines verwendeten zweidimensionalen Mikrolinsenarrays sich von der Brennweite der Mikrolinsen einer anderen Reihe unterscheidet. Für jede Reihe wird dadurch ein anderer Schärfentiefebereich definiert, so dass die Gesamtschärfentiefe des Objektfeststellungssensors vergrößert wird. Bei einer anderen Anwendung wird über den Vergleich der Signale der einzelnen Reihen unterschiedlicher Brennweite eine Abstandsinformation gewonnen.

Eine alternative vorteilhafte Ausführungsform sieht vor, dass sich die optische Transmission der im Lichtweg befindlichen Komponenten für wenigstens zwei Reihen aus Mikrolinsen unterscheidet, so dass die Dynamik des Sensors erhöht wird.

Eine andere Ausführungsform sieht vor, dass sich die numerische Apertur der im Lichtweg befindlichen Komponenten für wenigstens zwei Reihen aus Mikrolinsen unterscheidet, um gegebenenfalls über zusätzlich vorgesehene nachgeschaltete Software-Signalverarbeitungsalgorithmen Abbildungsartefakte eliminieren zu können.

Bei einer weiteren Ausführungsform unterscheidet sich die spektrale Befilterung der wenigstens zwei Reihen aus Mikrolinsen, so dass z.B. immer derjenige Spektralbereich ausgewertet werden kann, bei dem der Überwachungsraum den größten Kontrast aufweist.

Schließlich ist bei einer weiteren vorteilhaften Ausführungsform vorgesehen, dass sich die Richtungen der optischen Achsen der im Lichtweg befindlichen Komponenten für wenigstens zwei Reihen aus Mikrolinsen unterscheiden.

Wenn sich die optischen Achsen z.B. innerhalb einer Ebene senkrecht zur Ausrichtung einer Mikrolinsenreihe unterscheiden, können dadurch mehrere im Winkel zueinander gekippte zweidimensionale Schutzbereiche überwacht werden und auf diese Weise einen dreidimensionalen Schutzbereich annähern.

Unterscheiden sich die optischen Achsen der einzelnen Mikrolinsenreihen andererseits durch einen Winkel innerhalb einer Ebene parallel zu dem zweidimensionalen Schutzbereich, so kann der Sichtwinkel in der Ebene des Schutzbereichs - aufgeteilt auf verschiedene Reihen - vergrößert werden.

Möglich sind auch Ausführungsformen, bei denen sich die optischen Eigenschaften der Mikrolinsen nicht nur von einer Reihe zu einer anderen Reihe unterscheiden, sondern auch innerhalb einer Reihe. Auch für solche Ausführungsformen kommen zum Beispiel unterschiedliche Brennweiten, unterschiedliche optische Transmissionen, unterschiedliche numerische Aperturen, unterschiedliche spektrale Befilterung und/oder unterschiedlich ausgerichtete optische Achsen für die einzelnen Mikrolinsen in Betracht.

Die einzelnen Ausführungsformen, insbesondere bei Verwendung mehrerer Reihen aus Mikrolinsen, lassen sich auch untereinander kombinieren.

Im Folgenden wird die Erfindung anhand der beiliegenden schematischen und nicht maßstabsgetreuen Figuren im Detail erläutert. Es zeigen:
- Fig. 1: den Querschnitt einer Mikrolinsenreihe,
- Fig. 2: eine perspektivische Darstellung des Messprinzips anhand einer erfindungsgemäßen Ausführungsform,
- Fig. 3: eine Kameraanordnung,
- Fig. 4a: eine Mikrolinsenanordnung einer weiteren erfindungsgemäßen Ausführungsform,
- Fig. 4b: eine Querschnittsansicht der erfindungsgemäßen Anordnung der Fig. 4a in Blickrichtung A,
- Fig. 5a: eine Mikrolinsenanordnung nach einer weiteren Ausführungsform, und
- Fig. 5b: eine Querschnittsansicht der Anordnung der Fig. 5a in Blickrichtung B.

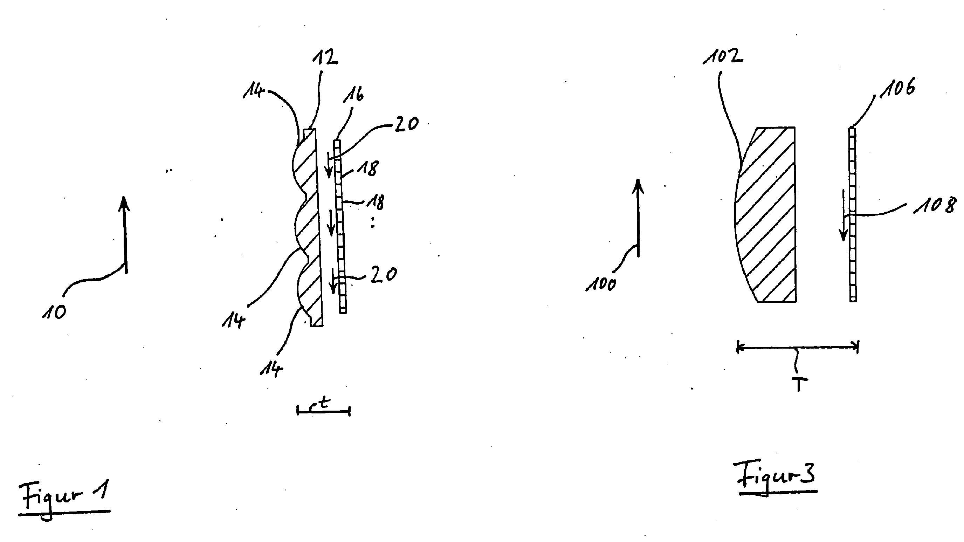

Fig. 1 zeigt eine Reihe 12 aus Mikrolinsen 14 im Querschnitt. Es kann sich dabei z.B. um zylinderlinsenförmige Elemente handeln. In der Regel werden jedoch Mikrolinsen 14 eingesetzt, die nicht nur in der Figurenebene sondern auch in einer Ebene senkrecht dazu einen linsenförmigen bzw. teillinsenförmigen Querschnitt aufweisen. In einem in der Figur links von der Mikrolinsenreihe angeordneten Überwachungsraum befindet sich ein Gegenstand 10, der mit Hilfe der Mikrolinsenreihe 12 auf das aus einzelnen CCD-Elementen 18 bestehende CCD-Array 16 abgebildet wird, das als Bildaufnehmer dient. Darauf entstehen einzelne Subbilder 20 des Gegenstands 10, wie es in Fig. 1 nur schematisch dargestellt ist. Die Bautiefe des Systems ist mit t bezeichnet.

Der einen zweidimensionalen Schutzbereich bildende Überwachungsraum ist hier parallel zur Figurenebene ausgerichtet. Unter "zweidimensionalem" Schutzbereich soll für die Zwecke des vorliegenden Textes ein Schutzbereich verstanden werden, der in einer Richtung senkrecht zu seiner Fläche eine Ausdehnung hat, die durch das Sichtfeld einer Mikrolinse definiert ist.

Das CCD-Array 16 ist in an sich bekannter und nicht dargestellter Weise an eine Auswerteeinheit angeschlossen. Diese verfügt über einen Auswertealgorithmus, der die einzelnen Subbilder verwendet, um ein Gesamtbild bzw. -signal zu errechnen, das aufgrund der mehreren Subbilder einer höheren Auflösung als ein einzelnes Subbild entspricht. Das erhaltene Signal wird mit einem Signal verglichen, das bei der Installation des Sensors ohne Objekt im Schutzbereich aufgenommen worden ist. Bei Abweichungen - also wenn sich z.B. ein Gegenstand im Schutzbereich befindet - wird z.B. ein Warnsignal erzeugt und/oder eine Maschine gestoppt, die mit dem Sensor überwacht wird.

Fig. 3 zeigt zum Vergleich ein System, bei dem vor einem Bildaufnehmer 106 eine konventionelle Linse 102 zur Abbildung verwendet wird. Der Gegenstand 100 wird durch die Linse 102 in das Bild 108 auf den Bildaufnehmer 106 abgebildet. Im Gegensatz zu der in Fig. 1 gezeigten Anordnung unter Verwendung von Mikrolinsen 12 entsteht hier eine sehr viel größere Bautiefe T. Es ergibt sich bei der Anordnung der Fig. 1 z.B. eine Verringerung der Bautiefe gegenüber einer Anordnung der Fig. 3 auf etwa ein Drittel.

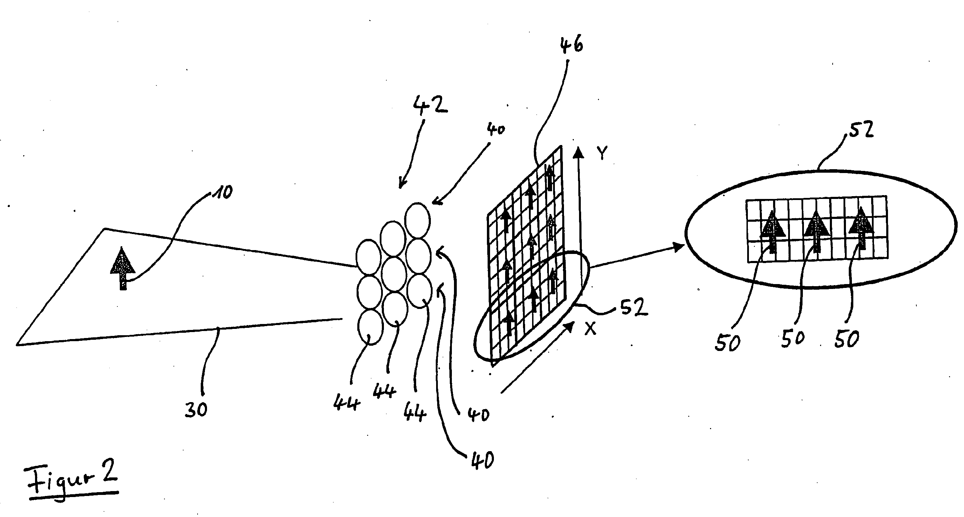

Fig. 2 zeigt eine erfindungsgemäße Anordnung unter Verwendung mehrerer Zeilen 40 aus Mikrolinsen 44, die ein Mikrolinsenarray 42 bilden. Der Bildaufnehmer 46 besteht hier aus einer Matrix aus CCD-Elementen. In dem zweidimensionalen Schutzbereich 30 befindet sich hier ein Gegenstand 10, der, im Unterschied zu der in Fig. 1 beschriebenen Anwendung, bei diesem Beispiel senkrecht zum zweidiniensionalen Schutzbereich 30 ausgerichtet ist. Insbesondere durch die untere Mikrolinsenreihe wird dieser Gegenstand in den unteren Teil des Bildaufnehmers 46 abgebildet. Dieser Bereich 52 des Bildaufnehmers 46 ist im rechten Teil der Fig. 2 noch einmal vergrößert dargestellt, so dass die einzelnen Subbilder 50 des Gegenstandes 10 erkennbar sind. Die Koordinatenrichtung X deutet die Richtung parallel zum Schutzbereich 30 an, während die Koordinatenrichtung Y senkrecht zum Schutzbereich 30 ausgerichtet ist.

Eine Zeile 40 des Mikrolinsenarrays 42, im gezeigten Beispiel die unterste, definiert die Ausrichtung des zweidimensionalen Schutzbereichs 30. Der Gegenstand 10 wird durch diese unterste Zeile aus Mikrolinsen in das Feld 52 des CCD-Arrays 46 abgebildet, ähnlich wie es bei der Anordnung der Fig. 1 geschieht.

Wie mit Bezug zu Fig. 1 beschrieben, wird mit einer nicht gezeigten Auswerteeinheit aus den in Richtung X nebeneinander liegenden Subbildern 50 eine hohe Auflösung hochgerechnet. In Y-Richtung ist die Auflösung aufgrund der kleinen Subbilder niedriger, was jedoch für die Funktion des Sensors zur Überwachung eines zweidimensionalen Schutzbereichs 30 unerheblich ist.

Sind wie in Fig. 2 mehrere Zeilen 40 aus Mikrolinsen 44 vorgesehen, können diese Zeilen unterschiedlich ausgestaltet sein. Weisen die Mikrolinsen der einzelnen Zeilen unterschiedliche Brennweite auf, so können sie unterschiedliche Schärfentiefenbereiche abdecken, so dass die Gesamtschärfentiefe des Systems erhöht ist. Die Signale einzelner Zeilen können dann auch eingesetzt werden, um Information über den Abstand des Gegenstands 10 von dem Mikrolinsenarray 42 zu erhalten.

Unterschiedliche optische Transmissionen der einzelnen Mikrolinsenzeilen, bewirkt z.B. durch Verwendung verschiedener Materialien, kann zur Erhöhung der Dynamik des Sensors eingesetzt werden. Haben die Mikrolinsen der unterschiedlichen Zeilen unterschiedliche numerische Apertur, können z.B. mit Hilfe einer nachgeschalteten Software Abbildungsartefakte eliminiert werden.

Bei einer anderen Anwendung werden die einzelnen Zeilen spektral unterschiedlich befiltert. So kann immer der Spektralbereich ausgewertet werden, bei dem der Überwachungsraum den höchsten Kontrast aufweist. Zum Beispiel kann mit Hilfe einer geeigneten Verteilung der spektralen Filter die physiologische Eigenschaft des menschlichen Sehsystems nachgebildet werden, das sehr empfindlich gegenüber der räumlichen Verteilung von Helligkeitswerten, aber weniger empfindlich gegenüber der räumlichen Verteilung von Farbwerten ist. Diese spezifischen Eigenschaften des menschlichen Sehsystems können so auf ein Sensorsystem übertragen werden.

Ebenso ist es denkbar, dass die einzelnen Mikrolinsen verschiedener Zeilen unterschiedlich ausgerichtete optische Achsen aufweisen.

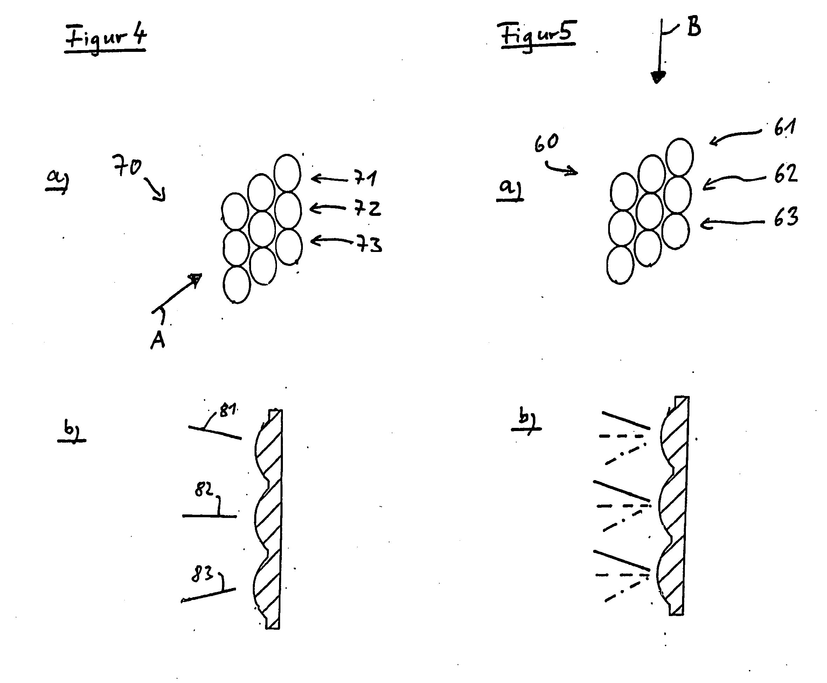

Dies wird schematisch anhand der Fig. 4 und 5 erläutert. Fig. 4a zeigt eine Anordnung 70 aus Mikrolinsen. Fig. 4b zeigt eine Querschnittsansicht in Blickrichtung A der Fig. 4a. Die Mikrolinsen der einzelnen Zeilen 71, 72, 73 der Mikrolinsenanordnung 70 unterscheiden sich in der Ausrichtung ihrer optischen Achsen 81, 82, 83. Jede einzelne Zeile 71, 72, 73 dient der Überwachung einer Ebene, die in Richtung der optischen Achsen 81, 82, 83 der Mikrolinsen dieser Zeile ausgerichtet ist. Mit einer solchen Anordnung können also mehrere im Winkel zueinander gekippte zweidimensionale Schutzbereiche überwacht werden, um einen dreidimensionalen Schutzbereich anzunähern.

Fig. 5a zeigt eine Anordnung 60 aus Mikrolinsen, die in mehreren Zeilen 61, 62, 63 angeordnet sind. Die optischen Achsen der einzelnen Zeilen 61, 62, 63 weisen seitlich abweichende Winkelausrichtungen auf. Fig. 5b zeigt eine Querschnittsansicht der Anordnung 60 in Blickrichtung B der Fig. 5a. Die durchgezogenen Linien deuten die optische Achse der Mikrolinsen der oberen Reihe 61 an, die strichlinierten Linien deuten die optischen Achsen der Mikrolinsen der mittleren Reihe 62 an, während die strichpunktierten Linien die optischen Achsen der Mikrolinsen der untersten Zeile 63 andeuten. In einer solchen Anordnung ist also der seitliche Sichtwinkel der Mikrolinsenanordnung 60 gegenüber einer einzelnen Mikrolinsenreihe erweitert.

Die geschilderten Ausführungsformen betreffen Zeilen von Mikrolinsen. Analog können auch Spalten von Mikrolinsen entsprechend ausgestaltet sein.

In den oben erläuterten Beispielen und Ausführungsformen wurde nur eine geringe Anzahl von Mikrolinsen dargestellt. Tatsächliche Ausführungsformen weisen eine sehr viel höhere Anzahl von Mikrolinsen und Mikrolinsenreihen auf. Die Anzahl der Mikrolinsen in einer Zeile/Spalte ist kleiner als die Zahl der Pixel einer Zeile/Spalte eines verwendeten CMOS/CCD-Bildaufnehmers. Weist dieser zum Beispiel 640 x 480 Pixel auf, können über eine gesamte Zeile zum Beispiel 300 Mikrolinsen verteilt sein.

### Bezugszeichenliste

- 10: Objekt
- 12: Mikrolinsenreihe
- 14: Mikrolinse
- 16: Bildaufnehmer
- 18: CCD-Element
- 20: Subbild
- 30: zweidimensionaler Schutzbereich
- 40: Mikrolinsenzeile
- 42: Mikrolinsenarray
- 44: Mikrolinse
- 46: Bildaufnehmer, CCD-Array
- 50: Subbild
- 52: Bildausschnitt
- 60: Mikrolinsenarray
- 61, 62, 63: Mikrolinsenzeile
- 70: Mikrolinsenarray
- 71, 72, 73: Mikrolinsenreihe
- 81, 82, 83: optische Achse
- 100: Objekt
- 102: Linse
- 106: Bildaufnehmer
- 108: Bild

- A, B: Blickrichtung
- X, Y: Koordinaten
- t, T: Bautiefe

## Patentansprüche

1. Objektfeststellungssensor zur Überwachung eines Schutzbereiches (30) auf die Anwesenheit eines Objektes (10), mit
- einem Bildaufnehmer (16, 46),
- wenigstens einer ersten vor dem Bildaufnehmer (16, 46) angeordneten Reihe (12, 40) aus Mikrolinsen (14, 44), die derart angeordnet sind, dass auf dem Bildaufnehmer (16, 46) von den einzelnen Mikrolinsen (14, 44) wenigstens dieser Reihe erzeugte Subbilder (20) räumlich versetzt zueinander abgebildet werden,
- einer Auswerteeinheit zur Auswertung eines von dem Bildaufnehmer (16, 46) empfangenen Bildes (52) auf Abweichungen von einem Sollsignal, die ausgestaltet ist, die einzelnen Subbilder (20) wenigstens einer Reihe zur Steigerung der Auflösung zu verwerten, insbesondere um ein Bild höherer Auflösung in Richtung der Reihe aus Mikrolinsen zu simulieren,
- wobei wenigstens zwei vor dem Bildaufnehmer angeordnete Reihen (40) aus Mikrolinsen (44) vorgesehen sind und sich die optischen Eigenschaften wenigstens einer Reihe von den optischen Eigenschaften wenigstens einer anderen Reihe unterscheiden.

2. Objektfeststellungssensor nach Anspruch 1, bei dem der Schutzbereich wenigstens eine Ebene (30) umfasst, deren Lage in einer Richtung durch die Ausrichtung einer Reihe (12, 40) aus Mikrolinsen (14, 44) bestimmt ist.

3. Objektfeststellungssensor nach einem der Ansprüche 1 oder 2, bei dem der Bildaufnehmer (16, 46) ein Array aus CCD-, oder CMOS-Elementen (18) umfasst.

4. Objektfeststellungssensor nach einem der Ansprüche 1 bis 3, bei dem sich die Brennweite der Mikrolinsen (44) wenigstens einer Reihe (40) von der Brennweite der Mikrolinsen (44) einer anderen Reihe (40) unterscheidet.

5. Objektfeststellungssensor nach einem der Ansprüche 1 bis 4, bei dem sich die optische Transmission der im Lichtweg befindlichen Komponenten für wenigstens zwei Reihen (40) aus Mikrolinsen (44) unterscheidet.

6. Objektfeststellungssensor nach einem der Ansprüche 1 bis 5, bei dem sich die numerische Apertur der im Lichtweg befindlichen Komponenten für wenigstens zwei Reihen (40) aus Mikrolinsen (44) unterscheidet.

7. Objektfeststellungssensor nach einem der Ansprüche 1 bis 6, bei dem sich die spektrale Befilterung der wenigstens zwei Reihen (40) aus Mikrolinsen (44) unterscheidet.

8. Objektfeststellungssensor nach einem der Ansprüche 1 bis 7, bei dem sich die optische Achsen der im Lichtweg befindlichen Komponenten für wenigstens zwei Reihen (40) aus Mikrolinsen (44) unterscheiden.

9. Objektfeststellungssensor nach Anspruch 8, bei dem sich die optischen Achsen wenigstens zweier Reihen aus Mikrolinsen innerhalb einer Ebene unterscheiden, die senkrecht zur Ausrichtung der Reihen aus Mikrolinsen angeordnet ist.

10. Objektfeststellungssensor nach Anspruch 8, bei dem sich die optischen Achsen wenigstens zweier Reihen aus Mikrolinsen innerhalb einer Ebene unterscheiden, die parallel zu dem zweidimensionalen Schutzbereich (30) ausgerichtet ist.

## Claims

1. An object determination sensor for monitoring a protective region (30) for the presence of an object (10) having
- an image receiver (16, 46),
- at least one first row (12, 40) of micro-lenses (14, 44) arranged in front of the image receiver (16, 46), said micro-lenses being arranged such that sub-images (20) generated by the individual micro-lenses (14, 44) of at least this row are spatially displaced from one another on the image receiver (16, 46),
- an evaluation unit for evaluating one of the images (52) received by the image receiver (16, 46) for deviations from a nominal signal said evaluation unit being configured to evaluate the individual sub-images (20) of at least one row for increasing the resolution, in particular to simulate an image of increased resolution in the direction of the row of micro-lenses,
- wherein at least two rows (40) of micro-lenses (44) arranged in front of the image receiver are provided and the optical properties of at least one row are different from the optical properties of at least one other row.

2. An object determination sensor in accordance with claim 1, in which the protective region includes at least one plane (30) whose position in one direction is determined by the alignment of a row (12, 40) of micro-lenses (14, 44).

3. An object determination sensor in accordance with one of the claims 1 or 2, in which the image receiver (16, 46) includes an array of CCD elements or CMOS elements (18).

4. An object determination sensor in accordance with any one of the claims 1 to 3, in which the focal length of the micro-lenses (44) of at least one row (40) is different from the focal length of the micro-lenses (44) of a different row (40).

5. An object determination sensor in accordance with any one of the claims 1 to 4, in which the optical transmission of the components present in the optical path is different for at least two rows (40) of micro-lenses (44).

6. An object determination sensor in accordance with any one of the claims 1 to 5, in which the numerical aperture of the components present in the optical path is different for at least two rows (40) of micro-lenses (44).

7. An object determination sensor in accordance with any one of the claims 1 to 6, in which the spectral filtering of the at least two rows (40) of micro-lenses (44) is different.

8. An object determination sensor in accordance with any one of the claims 1 to 7, in which the optical axes of the components present in the optical path are different for at least two rows (40) of micro-lenses (44).

9. An object determination sensor in accordance with claim 8, in which the optical axes of at least two rows of micro-lenses are different within a plane which is arranged perpendicular to the alignment of the rows of micro-lenses.

10. An object determination sensor in accordance with claim 8, in which the optical axes of at least two rows of micro-lenses are different within a plane which is aligned parallel to the two dimensional protective region (30).

## Revendications

1. Capteur de constatation d'objet pour surveiller une zone à protéger (30) vis-à-vis de la présence d'un objet (10), comprenant
- un dispositif de prise de vue (16, 46),
- au moins une première rangée (12, 40) de microlentilles (14, 44), agencée devant le dispositif de prise de vue (16, 46), lesquelles sont agencées de telle manière que les microlentilles individuelles (14, 44) de cette rangée aux moins engendrent des sous-images (20) disposées en décalage dans l'espace les unes par rapport aux autres,
- une unité d'évaluation pour évaluer une image (52) reçue par le dispositif de prise de vue (16, 46) vis-à-vis d'écarts par rapport à un signal de consigne, conçue pour évaluer les sous-images (20) individuelles d'au moins une rangée pour augmenter la résolution, en particulier pour simuler une image de plus grande résolution en direction de la rangée de microlentilles,
- dans lequel il est prévu au moins deux rangées (40) de microlentilles (44) agencées devant le dispositif de prise de vue, et les propriétés optiques d'au moins une rangée diffèrent des propriétés optiques d'au moins une autre rangée.

2. Capteur de constatation d'objet selon la revendication 1, dans lequel la zone à protéger comprend au moins un plan (30) dont la position est déterminée dans une direction par l'orientation d'une rangée (12, 40) de microlentilles (14, 44).

3. Capteur de constatation d'objet selon l'une des revendications 1 ou 2, dans lequel le dispositif de prise de vue (16, 46) comprend un réseau d'éléments à CCD ou d'éléments à CMOS (18).

4. Capteur de constatation d'objet selon l'une des revendications 1 à 3, dans lequel la distance focale des microlentilles (44) d'au moins une rangée (40) diffère de la distance focale des microlentilles (44) d'une autre rangée (40).

5. Capteur de constatation d'objet selon l'une des revendications 1 à 4, dans lequel la transmission optique des composants qui se trouvent dans le trajet de la lumière est différente pour au moins deux rangées (40) de microlentilles (44).

6. Capteur de constatation d'objet selon l'une des revendications 1 à 5, dans lequel l'ouverture numérique des composants qui se trouvent dans le trajet de la lumière diffère pour au moins deux rangées (40) de microlentilles (44).

7. Capteur de constatation d'objet selon l'une des revendications 1 à 6, dans lequel le filtrage spectral des au moins deux rangées (40) de microlentilles (44) est différent.

8. Capteur de constatation d'objet selon l'une des revendications 1 à 7, dans lequel les axes optiques des composants qui se trouvent dans le trajet de la lumière diffèrent pour au moins deux rangées (40) de microlentilles (44).

9. Capteur de constatation d'objet selon la revendication 8, dans lequel les axes optiques d'au moins deux rangées de microlentilles sont différents à l'intérieur d'un plan qui est agencé perpendiculairement à l'orientation des rangées de microlentilles.

10. Capteur de constatation d'objet selon la revendication 8, dans lequel les axes optiques d'au moins deux rangées de microlentilles sont différents à l'intérieur d'un plan qui est orienté parallèlement à la zone à protéger (30) bidimensionnelle.
